# FASCICULE DE BREVET EUROPEEN

(11) **EP 3 466 657 B1**
(45) Date de publication et mention de la délivrance du brevet: **01.04.2020**
(21) Numéro de dépôt: 18197931.1
(22) Date de dépôt: 01.10.2018
(51) Int. Cl.: B29C 70/46, B29C 70/38, F01D 25/24, B29C 70/54, B29C 70/88, B29K 705/00, B29L 31/30

(54) **PROCÉDÉ DE FABRICATION DE CARTER COMPOSITE DE COMPRESSEUR POUR TURBOMACHINE**
HERSTELLUNGSVERFAHREN EINES VERBUNDGEHÄUSES EINES KOMPRESSORS FÜR TURBOTRIEBWERK
MANUFACTURING METHOD FOR COMPOSITE HOUSING OF A COMPRESSOR FOR A TURBOMACHINE

(30) Priorité: 09.10.2017 BE 201705722
(43) Date de publication de la demande: 10.04.2019
(73) Titulaire: Safran Aero Boosters SA, 4041 Herstal (BE)
(72) Inventeur: DERCLAYE, Alain, 4218 Couthuin (BE); BEROT, Philippe, 4280 Abolens (BE)
(74) Mandataire: Lecomte & Partners

(56) Documents cités:
- EP-A1- 2 845 707
- US-A- 4 574 029
- US-B1- 8 974 618

## Description

### Domaine technique

L'invention aborde la fabrication d'un carter composite par mise en œuvre automatique des fibres, le carter étant un carter de turbomachine, ou plus précisément un carter de compresseur de turbomachine tel un turboréacteur.

### Technique antérieure

La réalisation d'un carter composite d'une turbomachine nécessite un placement précis des fibres afin d'aboutir à une distribution prédéterminée du renfort. En effet, l'orientation des fibres permet au carter de résister à des contraintes selon des directions et des modes donnés. La précision de placement des fibres peut être optimisée en employant un robot piloté. Sa tête d'application agence scrupuleusement les fibres selon un modèle calculé par logiciel. Le document EP2845707 A1 divulgue un procédé de fabrication d'une pièce composite comprenant un corps en résine et une tôle formant une surface de ladite pièce, le procédé comprenant les étapes suivantes : (a) mise en place de la tôle contre une surface incurvée et/ou bombée d'un moule; (b) injection et solidification de la résine dans le moule de sorte à former le corps en le liant à la tôle; (c) démoulage de la pièce composite ; tel qu'avant l'étape (b) le procédé comprend une étape (b-3) préalable à l'étape (b), de mise en place d'une préforme fibreuse dans le moule qui recouvre la tôle.

Le document US 2014/0086734 A1 divulgue une méthode pour réaliser un carter composite de turbomachine. La méthode consiste à réaliser une feuille à 360° selon la technique AFP, à mettre en place plusieurs segments contre la feuille à 360°, puis à solidifier ensemble la feuille à 360° et les segments. Toutefois, les contraintes géométriques de cette méthode restent élevées. Le nombre de constituants doit être limité pour que le drapage reste simple. Par ailleurs, la précision de positionnement des fibres reste limitée.

### Résumé de l'invention

### Problème technique

L'invention a pour objectif de résoudre au moins un des problèmes posés par l'art antérieur. Plus précisément, l'invention vise à améliorer la précision de positionnement des fibres d'un carter composite. L'invention a également pour objectif de proposer une solution simple, légère, économique, fiable, facile à produire, et d'inspection aisée.

### Solution technique

L'invention a pour objet un procédé de fabrication d'un carter composite arqué de turbomachine, notamment de turboréacteur d'aéronef, le procédé comprenant les étapes suivantes : (a) drapage d'une préforme par dépôt automatique de fibres de carbone sur un gabarit concave; (b) mise en place d'un pli de fibres de verre sur un gabarit convexe ; (c) transfert de la préforme sur le gabarit convexe en recouvrant le pli de fibres de verre sur le gabarit convexe.

Selon des modes avantageux de l'invention, le procédé peut comprendre une ou plusieurs des caractéristiques suivantes, prises isolément ou selon toutes les combinaisons techniques possibles :
- L'étape (b) mise en place comprend une phase (α) mise en place d'un feuillard métallique et/ou d'un profilé époxy sur le gabarit convexe puis une phase (β) recouvrement du feuillard métallique par le pli de fibres de verre.
- Le procédé comprend en outre une étape (e) cuisson d'un empilement formé par le pli de fibres de verre et la préforme de manière à former un carter brut.
- Le gabarit convexe est une partie de moule convexe, l'étape (e) cuisson étant effectuée sur la partie de moule convexe, notamment en combinaison d'un contre-moule concave disposé autour de la préforme.
- Le procédé comprend en outre une étape (f) usinage du carter, notamment de la pièce composite issue de l'étape (e) cuisson.
- L'étape (f) usinage comprend le perçage d'orifices traversant le carter, lesdits perçages décrivant au moins une rangée arquée, éventuellement jusqu'à six rangées arquées, notamment aptes à recevoir des aubes de redresseur.
- Le procédé comprend en outre une étape (d) marouflage de la préforme sur le pli de fibres de verre, et/ou d'une membrane contre la préforme.
- Le carter est formé par demi-coquilles, le procédé comprend en outre une étape (g) assemblage de deux demi-coquilles, le carter présentant un diamètre intérieur compris entre 0,40 m et 3,00 m.
- Le procédé comprend en outre une étape (h) projection thermique d'un matériau abradable à l'intérieur du carter.
- A l'issue de l'étape (a) drapage, la préforme présente au moins une bride s'étendant radialement contre le gabarit concave, et/ou contre le gabarit convexe.
- La au moins une bride comprend une bride axiale et/ou une bride arquée autour d'un axe de rotation de la turbomachine, à l'issue de l'étape (a) drapage, la bride axiale et la bride arquée s'étendent depuis un même coin, ledit coin présentant un dégagement séparant lesdites brides, au moins sur une partie de leurs hauteurs radiales.
- Lors de l'étape (a) drapage, les fibres déposées automatiquement comprennent un ruban tissé en deux dimensions ou un ruban de fibres unidirectionnelles, les fibres étant éventuellement des fibres pré-imprégnées ou des fibres sèches.
- Lors de l'étape (a) drapage, les fibres déposées automatiquement comprennent une tresse tressée en deux dimensions et/ou une tresse tressée en trois dimensions, les fibres étant éventuellement des fibres sèches.
- Lors de l'étape (a) drapage, les fibres déposées automatiquement comprennent une bande plate, notamment de fibres sèches.
- A l'issue de l'étape (a) drapage, la préforme présente au moins dix strates, éventuellement au moins quinze strates, chacune formée par au moins un pli fibreux ou un ruban de fibres parallèles.
- Le carter présente deux extrémités opposées, éventuellement diamétralement ou axialement opposées, le carter présentant une paroi d'épaisseur constante s'étendant jusqu'à chacune desdites extrémités opposées.
- A l'étape (e) cuisson, une résine thermodurcissable ou une résine thermoplastique imprègne le pli de fibres de verre et la préforme.
- Avant l'étape (e) cuisson, une résine infuse, et/ou est injectée dans, les fibres du pli de fibres de verre et de la préforme.
- Le gabarit convexe comprend une surface de réception convexe, à l'issue de l'étape (c) transfert, la préforme et le pli de fibres de verre recouvrent chacun toute la surface de réception.
- Le procédé comprend en outre une étape (i) montage d'aubes de stator à l'intérieur du carter de manière à former de un à six redresseurs, éventuellement de trois à quatre redresseurs.
- A l'issue de l'étape (a) drapage, la préforme présente deux extrémités opposées, éventuellement diamétralement ou axialement opposées, la préforme présentant une paroi d'épaisseur constante s'étendant depuis chacune desdites extrémités opposées.
- A l'issue de l'étape (c) transfert, la préforme s'étend sur toute la longueur axiale du pli de fibres de verre.
- Lors de l'étape (a) drapage, les fibres déposées automatiquement comprennent des fibres sèches ou des fibres pré-imprégnées.
- Au moins un ou chaque pli est en intissé ou tissé.
- A l'étape (e) cuisson, la résine thermodurcissable ou la résine thermoplastique polymérise.
- A l'issue de la phase (β) recouvrement le pli de fibres de verre est intercalé entre le feuillard métallique et les fibres de carbone de manière à isoler électriquement les fibres de carbone du feuillard métallique.
- A l'issue de l'étape (f) usinage, la préforme présente une bride axiale et une bride annulaire s'étendant depuis un même coin, ledit coin présentant un dégagement séparant lesdites brides, au moins sur une partie de leurs hauteurs radiales.
- La pointe présente trois pans et/ou trois arêtes.

L'invention a également pour objet un procédé de fabrication d'un carter composite arqué de turbomachine, le procédé comprenant les étapes suivantes : (a) drapage d'une préforme par dépôt automatique de fibres de carbone sur un gabarit concave; (α) mise en place d'un feuillard métallique et/ou d'un profilé époxy sur un gabarit convexe ; (β) recouvrement du feuillard et/ou du profilé par un pli de fibres de verre recouvrant également le gabarit convexe ; (c) transfert de la préforme sur le gabarit convexe en recouvrant le pli de fibres de verre sur le gabarit convexe.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Avantages apportés

L'invention permet de préserver la précision d'orientation des fibres malgré un nombre croissant de constituants, notamment de constituants de différentes natures. Par ailleurs, la préforme drapée conserve sa précision d'agencement malgré la présence d'inserts, et sa manipulation avant polymérisation. En effet, les fibres de carbone sont mises en œuvre sur un premier gabarit, et les fibres de verre ; donc d'une autre nature ; sont placées sur un deuxième gabarit.

Le carter tolère les étapes de finition tel l'usinage car les fibres respectent des emplacements précis par rapport aux zones coupées. Ainsi, le carter s'adapte à un nombre d'interface mécanique croissant.

### Brève description des dessins

La figure 1 représente une turbomachine axiale selon l'invention.
La figure 2 est un schéma d'un compresseur de turbomachine selon l'invention.
La figure 3 représente une étape de drapage d'une préforme selon l'invention.
La figure 4 illustre une étape de mise en place d'un pli en fibres de verre selon l'invention.
La figure 5 illustre un diagramme du procédé de fabrication d'un carter composite selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine, ou le long de l'axe de révolution du carter. La direction radiale est perpendiculaire à l'axe de rotation. L'amont et l'aval sont en référence au sens d'écoulement principal du flux dans la turbomachine.

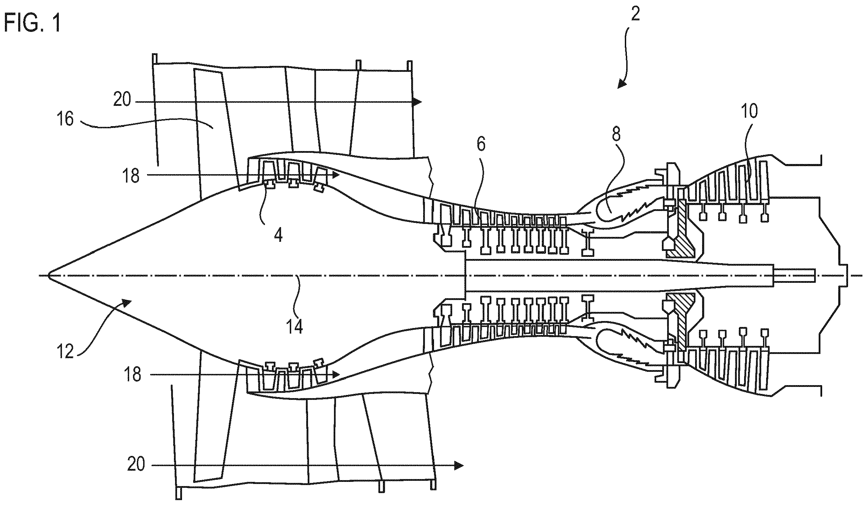

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre. Ils sont canalisés par le carter de la turbomachine et/ou des viroles.

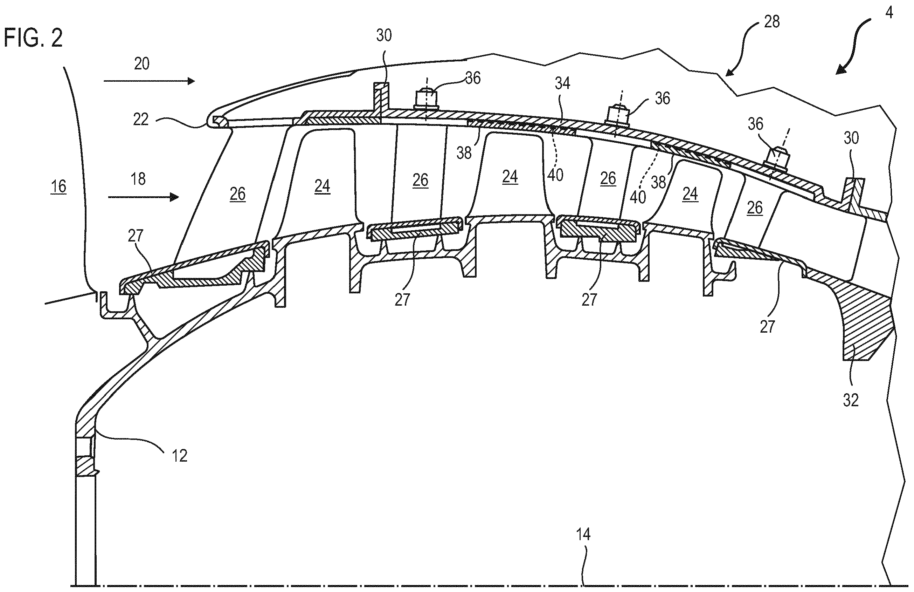

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois. Il peut être formé d'un tambour comme de disques monobloc(s).

Le compresseur basse-pression 4 comprend plusieurs redresseurs, en l'occurrence quatre, qui contiennent chacun une rangée annulaire d'aubes statoriques 26. Les redresseurs sont associés au fan 16 ou à une rangée d'aubes rotoriques pour redresser le flux d'air, de sorte à convertir la vitesse du flux en pression, notamment en pression statique.

Des viroles internes 27 peuvent être suspendues aux extrémités internes des aubes statoriques 26. Ces viroles internes 27 peuvent recevoir des couches de matériau abradable 38 assurant une étanchéité avec le rotor 12.

Le compresseur 4 comprend au moins un carter composite 28. Le carter 28 peut présenter une forme généralement circulaire ou tubulaire. En fonctionnement, il est exposé à des températures de -70°C à 150°C. Il peut être un carter externe de compresseur et peut être en matériaux composites à matrice organique.

Le carter 28 peut comprendre des brides de fixation 30, par exemple des brides annulaires de fixation 30 pour la fixation du bec de séparation 22 et/ou pour se fixer à un carter intercalaire 32 de soufflante de la turbomachine. Les aubes statoriques 26 s'étendent essentiellement radialement depuis le carter extérieur 28. Les aubes statoriques 26 peuvent comprendre des plateformes, et/ou des axes de fixation 36.

Le carter composite 28 peut comprendre une paroi 34 généralement circulaire ou en arc de cercle, dont les bords peuvent être délimités par les brides 30. La paroi 34 peut présenter un profil de révolution autour de l'axe de rotation 14. Elle peut être en matériau composite, avec une matrice et un renfort fibreux. Sa forme peut être en ogive ou sphéroïdale, avec une variation de rayon le long de l'axe 14.

La paroi 34 peut comprendre des couches annulaires de matériau abradable 38 entre les plateformes des aubes 26, de sorte à former des joints d'étanchéité contre les recirculations. Un ou plusieurs feuillards 40 peuvent être intégrés. Chaque couche d'abradable 38 peut être associée à un feuillard 40. Chaque feuillard 40 peut former un ruban métallique, éventuellement perforé. Il peut former l'interface de fixation entre la paroi 34 et la couche abradable 38.

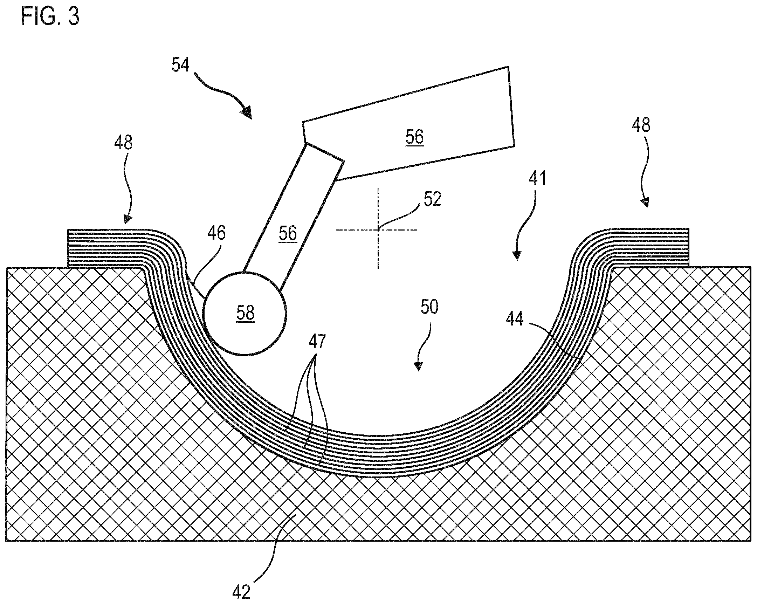

La figure 3 illustre une étape de drapage d'une préforme 41 par dépôt automatique de fibres de carbone sur un gabarit concave 42, également appelé gabarit femelle. Le gabarit 42 est montré en coupe perpendiculairement à la direction axiale et/ou à l'axe 52.

Le gabarit concave 42 comprend une surface de drapage concave 44 sur laquelle sont disposées les fibres, notamment de carbone. Les fibres 46 peuvent être placées sous la forme de rubans et/ou de plis de sorte à former plusieurs couches 47. Les rubans peuvent être placés parallèlement et accolés transversalement afin de former une couche 47. Ainsi, la préforme fibreuse 41 peut monter un empilement de couches 47 ou strates. Les couches 47 sont superposées radialement.

La surface de drapage 44 peut comprendre des zones latérales 48 permettant de réaliser les brides axiales 48 du carter. Elle peut comprendre une portion arquée 50, éventuellement tubulaire ou ellipsoïdale. Elle peut permettre de réaliser la paroi du carter composite telle que présentée en relation avec la figure 2. La surface concave 44 est adaptée en conséquence, notamment en prenant en compte l'épaisseur finale de la paroi. La portion arquée 50 peut présenter un axe de révolution 52, ou axe de symétrie. Cet axe 52 peut correspondre à l'axe de rotation du compresseur.

Le drapage peut être réalisé automatiquement à l'aide d'un robot 54. Ce robot 54 peut réaliser le drapage selon la technique de placement automatique de fibres 46, également désigné par l'acronyme APF correspondant à l'expression anglo-saxonne « Automated Fiber Placement ». La mise en place de plusieurs rubans fibreux sur une même surface permet de réaliser une couche fibreuse 47.

Le robot 54 peut comprendre un ou plusieurs bras mobiles 56 permettant de déplacer une tête d'application 58. La tête d'application 58 parcourt la surface concave 44 et y dépose des fibres 46 selon des directions préétablies, de manière à tendre vers la préforme 41 évoquée ci-dessus.

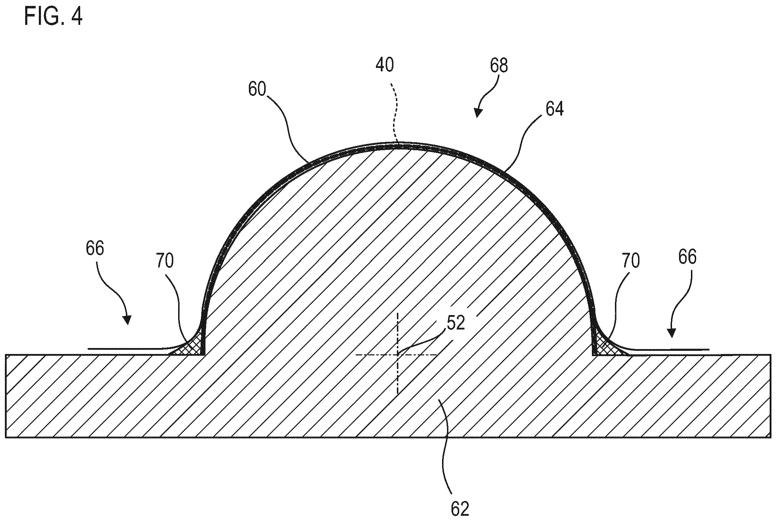

La figure 4 présente une étape de mise en place d'un pli de fibres de verre 60 sur un gabarit convexe 62, également appelé gabarit mâle. Le gabarit convexe 62 comprend une surface de réception 64, essentiellement convexe, de forme complémentaire à la surface interne du carter à réaliser. Le gabarit convexe 62 est représenté en coupe perpendiculairement à l'axe de révolution 52.

Le gabarit convexe 62 peut présenter des zones latérales 66 permettant de réaliser des brides, notamment axiales. Comme pour le gabarit concave, des formes pour les brides annulaires ou semi-circulaires (non représentées) peuvent être prévues. En outre, la surface de réception 64 peut présenter une zone centrale 68 permettant de réaliser la paroi entre les brides.

Les feuillards 40 peuvent être placés entre le pli 60 et le gabarit 62. Il peut y être maintenu provisoirement. Des profilés 70, par exemple en polymères chargés peuvent combler les vides entre les arrondis du pli en fibres de verre 60, et les angles formés par la surface de réception 64. Les profilés permettent de réaliser des arêtes vives au niveau des brides axiales et annulaires.

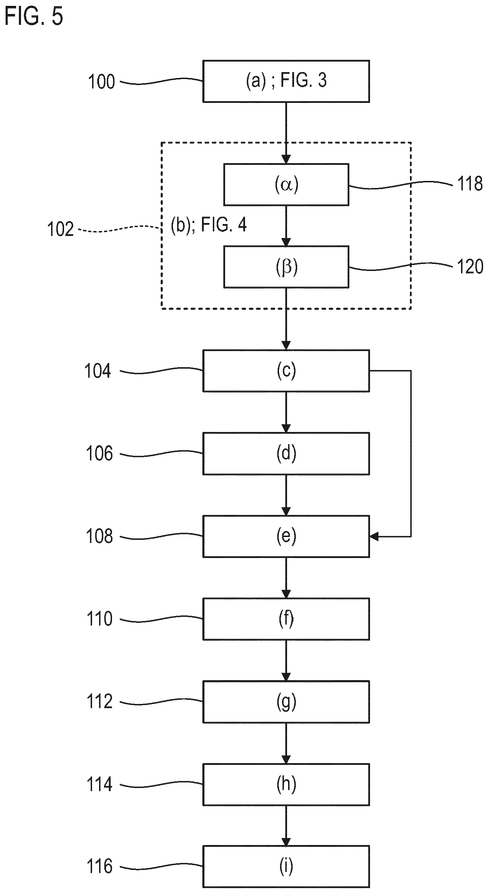

La figure 5 présente un diagramme du procédé de fabrication de carter. Le carter fabriqué peut correspondre à ceux mentionnés en relation avec les figures 1 à 4.

Le procédé peut comprendre les étapes suivantes, notamment effectuées dans l'ordre indiqué ci-dessous :
(a) drapage 100 d'une préforme par dépôt automatique de fibres de carbone sur un gabarit concave femelle.
(b) mise en place 102 d'un pli de fibres de verre sur un gabarit convexe mâle.
(c) transfert 104 de la préforme sur le gabarit convexe en recouvrant le pli de fibres de verre sur le gabarit convexe.
(d) marouflage 106 de la préforme sur le pli de fibres de verre, et/ou d'une membrane contre la préforme comprenant les fibres de carbone.
(e) cuisson 108 d'un empilement formé par le pli de fibres de verre et la préforme de manière à former un carter brut en polymérisant la résine mélangée aux fibres.
(f) usinage 110 du carter brut issu du moulage après cuisson, c'est-à-dire usinage de la préforme solidifiée par la résine transformée.
(g) assemblage 112 de deux demi-coquilles de moule lorsque le carter est réalisé par demi-coquilles.
(h) projection thermique 114, par exemple une projection plasma, d'un matériau abradable à l'intérieur du carter de manière à former des joints annulaires.
(i) montage 116 d'aubes de stator à l'intérieur du carter de manière à former de un à six redresseurs, éventuellement de trois à quatre redresseurs.

Les aubes, notamment leurs plateformes, peuvent venir au contact du pli en fibre de verre, et peuvent être isolées électriquement des fibres de carbone. Le contact plateformes/fibres de verre dicte l'orientation des aubes.

Lorsque le carter est réalisé par demi-coquilles, ou par segments angulaires de manière plus générale, les demi-coquilles ou les segments angulaires peuvent être séparés les uns des autres afin de faciliter l'assemblage de viroles internes et le montage du carter autour du rotor, par exemple lorsque ce dernier est du type tambour monobloc.

A l'issue de l'étape (a) drapage 100, notamment illustrée en figure 3, la préforme peut montrer au moins une, ou au moins deux brides annulaires s'étendant radialement contre le gabarit concave. Ces brides peuvent être formées aux extrémités axiales de la préforme. Elles peuvent inclure une bride axiale et/ou une bride arquée autour d'un axe de rotation de la turbomachine, à l'issue de l'étape (a) drapage 100, la bride axiale et la bride arquée peuvent s'étendre depuis un même coin faisant une pointe. Le coin peut correspondre à un coin de demi-coquille. Le coin peut présenter un dégagement séparant lesdites brides. Ce coin peut être issu du drapage de fibre.

Lors de l'étape (a) drapage 100, les fibres peuvent être déposées sous la forme d'un ruban tissé en deux dimensions ou d'un ruban de fibres unidirectionnelles. Ces fibres peuvent alors être des fibres pré-imprégnées ou des fibres sèches. En alternative ou en complément, lors de l'étape (a) drapage 100, les fibres déposées automatiquement peuvent être apportées sous la forme d'une tresse tressée. Cette tresse peut être tressée en deux dimensions ou en trois dimensions. A nouveau, les fibres peuvent être des fibres sèches, ou encore des fibres pré-imprégnées.

A l'issue de l'étape (a) drapage 100, la préforme présente au moins dix strates de fibres de carbone, éventuellement au moins quinze strates de fibres de carbone, chacune formée par au moins un pli de fibres. Chaque strate peut comprendre et/ou être formée de plis identiques, et éventuellement agencés selon une même orientation de fibres.

L'étape (b) mise en place 102 est notamment illustrée par la figure 4. L'étape (b) mise en place 102 peut comprendre une phase intermédiaire (α) mise en place 118 d'un feuillard métallique et/ou d'un profilé époxy sur le gabarit convexe puis une phase intermédiaire (β) recouvrement 120 du feuillard métallique et/ou du profilé par le pli de fibres de verre.

A l'issue de l'étape (c) transfert, la préforme et le pli de fibres de verre recouvrent chacun toute la surface de drapage.

Le gabarit convexe peut être une partie de moule convexe. A l'étape (e) cuisson 108, le gabarit convexe peut être directement utilisé comme moule pour y solidifier la préforme par chauffage afin qu'elle devienne le carter composite souhaité. Un contre-moule concave disposé autour de la préforme peut être amené contre la préforme afin de fermer le moule. Ainsi, une chambre de moulage, notamment une chambre d'injection de résine peut être délimitée. L'étape (f) usinage 110 peut comprendre la découpe des bords des brides de sorte que leurs bords soient nets. L'étape (f) usinage 110 peut être réalisée par fraisage. Elle peut inclure la réalisation de perçages formant les orifices de fixation d'aubes. Les orifices peuvent recevoir les axes de fixation des aubes. Les perçages peuvent décrire trois ou quatre rangées annulaires pour les aubes statoriques des redresseurs. D'autres rangées d'orifices peuvent être réalisées dans les brides de fixation.

A l'étape (e) cuisson 108, une résine thermodurcissable ou une résine thermoplastique imprègne le pli de fibres de verre et la préforme. Il peut s'agir d'une résine époxy, ou de PEI notamment. Cette résine peut être injectée dans le moule grâce à une pompe.

## Revendications

1. Procédé de fabrication d'un carter composite (28) arqué de turbomachine (2), notamment de turboréacteur d'aéronef, le procédé comprenant les étapes suivantes :
(a) drapage (100) d'une préforme (41) par dépôt automatique de fibres de carbone (46) sur un gabarit concave (42) ;
(b) mise en place (102) d'un pli de fibres de verre (60) sur un gabarit convexe (62) ;
(c) transfert (104) de la préforme (41) sur le gabarit convexe (62) en recouvrant le pli de fibres de verre (60) sur le gabarit convexe (62).

2. Procédé selon la revendication 1, **caractérisé en ce que** l'étape (b) mise en place (102) comprend une phase (α) mise en place (118) d'un feuillard métallique (40) et/ou d'un profilé époxy (70) sur le gabarit convexe (62) puis une phase (β) recouvrement (120) du feuillard (40) et/ou du profilé (70) par le pli de fibres de verre (60).

3. Procédé selon l'une des revendications 1 à 2, **caractérisé en ce qu'**il comprend en outre une étape (e) cuisson (108) d'un empilement formé par le pli de fibres de verre (60) et la préforme (41) de manière à former un carter brut.

4. Procédé selon la revendication 3, **caractérisé en ce que** le gabarit convexe (62) est une partie de moule convexe, l'étape (e) cuisson (102) étant effectuée sur la partie de moule convexe, notamment en combinaison d'un contre-moule concave disposé autour de la préforme (41).

5. Procédé selon l'une des revendications 3 à 4, **caractérisé en ce qu'**à l'étape (e) cuisson (102), une résine thermodurcissable ou une résine thermoplastique imprègne le pli de fibres de verre (60) et la préforme (41).

6. Procédé selon l'une des revendications 3 à 5, **caractérisé en ce qu'**avant l'étape (e) cuisson (102), une résine infuse, et/ou est injectée dans, les fibres du pli de fibres de verre (60) et de la préforme (41).

7. Procédé selon l'une des revendications 1 à 6, **caractérisé en ce qu'**il comprend en outre une étape (f) usinage (110) du carter (28), notamment de la pièce composite issue de l'étape (e) cuisson (102), l'étape (f) d'usinage (110) comprenant le perçage d'orifices traversant le carter (28), lesdits perçages décrivant au moins une rangée arquée, éventuellement jusqu'à six rangées arquées, notamment aptes à recevoir des aubes (26) de redresseur.

8. Procédé selon l'une des revendications 1 à 7, **caractérisé en ce qu'**il comprend en outre une étape (d) marouflage (106) de la préforme (41) sur le pli de fibres de verre (60), et/ou d'une membrane contre la préforme (41).

9. Procédé selon l'une des revendications 1 à 8, **caractérisé en ce que** le carter (28) est formé par demi-coquilles, le procédé comprend en outre une étape (g) assemblage (112) desdites deux demi-coquilles, le carter (28) présentant un diamètre intérieur compris entre 0,40 m et 3,00 m.

10. Procédé selon l'une des revendications 1 à 9, **caractérisé en ce qu'**il comprend en outre une étape (h) de projection thermique (114) d'un matériau abradable (38) à l'intérieur du carter (28).

11. Procédé selon l'une des revendications 1 à 10, **caractérisé en ce que** lors de l'étape (a) drapage (100), les fibres (46) déposées automatiquement comprennent un ruban tissé en deux dimensions ou un ruban de fibres unidirectionnelles, les fibres étant éventuellement des fibres pré-imprégnées ou des fibres sèches.

12. Procédé selon l'une des revendications 1 à 11, **caractérisé en ce que** lors de l'étape (a) drapage (100), les fibres (46) déposées automatiquement comprennent une bande plate, notamment de fibres sèches.

13. Procédé selon l'une des revendications 1 à 12, **caractérisé en ce qu'**à l'issue de l'étape (a) drapage (100), la préforme (41) présente au moins dix strates, éventuellement au moins quinze strates, chacune formée par au moins un pli fibreux ou un ruban de fibres parallèles.

14. Procédé selon l'une des revendications 1 à 13, **caractérisé en ce que** le gabarit convexe (62) comprend une surface de réception convexe (64), à l'issue de l'étape (c) transfert (104), la préforme (41) et le pli de fibres de verre (60) recouvrent chacun toute la surface de réception convexe (64).

15. Procédé selon l'une des revendications 1 à 14, **caractérisé en ce qu'**il comprend en outre une étape (i) montage d'aubes de stator (26) à l'intérieur du carter (28) de manière à former de un à six redresseurs, éventuellement de trois à quatre redresseurs.

## Patentansprüche

1. Verfahren zur Herstellung eines gebogenen Gehäuses (28) aus Verbundwerkstoff für eine Turbomaschine (2), insbesondere ein Flugzeug-Turboluftstrahltriebwerk, wobei das Verfahren die folgenden Schritte umfasst:
(a) Drapieren (100) einer Vorform (41) durch automatisches Auflegen von Kohlefasern (46) auf eine konkave Form (42);
(b) Auflegen (102) einer Glasfaserlage (60) auf eine konvexe Form (62);
(c) Übertragen (104) der Vorform (41) auf die konvexe Form (62) durch Bedecken der Glasfaserlage (60) auf der konvexen Form (62).

2. Verfahren nach Anspruch 1, **dadurch gekennzeichnet, dass** der Schritt (b) Auflegen (102) eine Phase (α) des Auflegens (118) eines Metallstreifens (40) und/oder eines Epoxid-Profils (70) auf die konvexe Form (62) und anschließend eine Phase (β) des Bedeckens (120) des Streifens (40) und/oder des Profils (70) mit der Glasfaserlage (60) umfasst.

3. Verfahren nach einem der Ansprüche 1 und 2, **dadurch gekennzeichnet, dass** es außerdem einen Schritt (e) des Aushärtens (108) eines Schichtsystems aus der Glasfaserlage (60) und der Vorform (41) umfasst, um ein rohes Gehäuse zu bilden.

4. Verfahren nach Anspruch 3, **dadurch gekennzeichnet, dass** die konvexe Form (62) ein konvexes Formteil ist, wobei der Schritt (e) Aushärten (102) an dem konvexen Formteil durchgeführt wird, insbesondere in Kombination mit einer konkaven Gegenform, die um die Vorform (41) herum angeordnet ist.

5. Verfahren nach einem der Ansprüche 3 und 4, **dadurch gekennzeichnet, dass** in Schritt (e) Aushärten (102) ein thermohärtendes Harz oder ein thermoplastisches Harz die Glasfaserlage (60) und die Vorform (41) durchtränkt.

6. Verfahren nach einem der Ansprüche 3 bis 5, **dadurch gekennzeichnet, dass** vor dem Schritt (e) Aushärten (102) ein Harz in die Fasern der Glasfaserlage (60) und der Vorform (41) einfließt und/oder eingespritzt wird.

7. Verfahren nach einem der Ansprüche 1 bis 6, **dadurch gekennzeichnet, dass** es außerdem einen Schritt (f) Bearbeitung (110) des Gehäuses (28), insbesondere des aus dem Schritt (e) Aushärten (102) resultierenden Verbundteils, umfasst, wobei der Schritt (f) Bearbeitung (110) das Bohren von Öffnungen umfasst, die sich über das Gehäuse (28) erstrecken, wobei die genannten Öffnungen mindestens eine gebogene Reihe, möglicherweise bis zu sechs gebogene Reihen, beschreiben, die insbesondere geeignet sind, Strömungsbegrenzer-Schaufeln (26) aufzunehmen.

8. Verfahren nach einem der Ansprüche 1 bis 7, **dadurch gekennzeichnet, dass** es ferner einen Schritt (d) Verbinden (106) der Vorform (41) mit der Glasfaserlage (60) und/oder Verbinden einer Membran mit der Vorform (41) umfasst.

9. Verfahren nach einem der Ansprüche 1 bis 8, **dadurch gekennzeichnet, dass** das Gehäuse (28) aus Halbschalen gebildet wird; das Verfahren umfasst ferner einen Schritt (g) Zusammenfügen (112) der beiden Halbschalen, wobei das Gehäuse (28) einen Innendurchmesser zwischen 0,40 m und 3,00 m aufweist.

10. Verfahren nach einem der Ansprüche 1 bis 9, **dadurch gekennzeichnet, dass** es ferner einen Schritt (h) des thermischen Spritzens (114) eines abreibbaren Materials (38) im Inneren des Gehäuses (28) umfasst.

11. Verfahren nach einem der Ansprüche 1 bis 10, **dadurch gekennzeichnet, dass** während des Schrittes (a) Drapieren (100) die automatisch angeordneten Fasern (46) ein zweidimensionales gewebtes Band oder ein Band aus unidirektionalen Fasern umfassen, wobei die Fasern möglicherweise vorgetränkte Fasern oder trockene Fasern sind.

12. Verfahren nach einem der Ansprüche 1 bis 11, **dadurch gekennzeichnet, dass** beim Schritt (a) Drapieren (100) die automatisch aufgelegten Fasern (46) einen flachen Streifen, insbesondere aus trockenen Fasern, umfassen.

13. Verfahren nach einem der Ansprüche 1 bis 12, **dadurch gekennzeichnet, dass** die Vorform (41) am Ende des Schrittes (a) Drapieren (100) mindestens zehn Schichten, möglicherweise mindestens fünfzehn Schichten, aufweist, die jeweils aus mindestens einer Faserlage oder einem Band aus parallelen Fasern gebildet sind.

14. Verfahren nach einem der Ansprüche 1 bis 13, **dadurch gekennzeichnet, dass** die konvexe Form (62) eine konvexe Aufnahmefläche (64) aufweist; am Ende des Schrittes (c) Übertragen (104) bedecken die Vorform (41) und die Glasfaserlage (60) jeweils die gesamte konvexe Aufnahmefläche (64).

15. Verfahren nach einem der Ansprüche 1 bis 14, **dadurch gekennzeichnet, dass** es ferner einen Schritt (i) Montieren von Statorschaufeln (26) im Inneren des Gehäuses (28) umfasst, so dass ein bis sechs Strömungsgleichrichter, möglicherweise drei bis vier Strömungsgleichrichter, gebildet werden.

## Claims

1. Method for manufacturing a curved composite casing (28) for a turbomachine (2), notably an aircraft turbojet engine, the method comprising the following steps:
(a) draping (100) a preform (41) by automatic placement of carbon fibres (46) on a concave form (42);
(b) laying (102) a glass-fibre ply (60) on a convex form (62);
(c) transferring (104) the preform (41) onto the convex form (62) by covering the glass-fibre ply (60) on the convex form (62).

2. Method according to claim 1, **characterized in that** step (b) laying (102) comprises a phase (α) of laying (118) a metal strip (40) and/or an epoxy profile (70) on the convex form (62) then a phase (β) of covering (120) the strip (40) and/or the profile (70) with the glass-fibre ply (60).

3. Method according to any of claims 1 and 2, **characterized in that** it further comprises a step (e) of curing (108) a stack made up of the glass-fibre ply (60) and the preform (41), so as to form a rough casing.

4. Method according to claim 3, **characterized in that** the convex form (62) is a convex mould part, step (e) curing (102) being performed on the convex mould part, notably in combination with a concave counter-mould arranged around the preform (41).

5. Method according to one of claims 3 and 4, **characterized in that** in step (e) curing (102), a thermosetting resin or a thermoplastic resin impregnates the glass-fibre ply (60) and the preform (41).

6. Method according to either of claims 3 to 5, **characterized in that** before step (e) curing (102) a resin infuses and/or is injected into the fibres of the glass-fibre ply (60) and of the preform (41).

7. Method according to one of claims 1 to 6, **characterized in that** it further comprises a step (f) of machining (110) the casing (28), notably the composite part resulting from step (e) curing (102), step (f) machining (110) comprising the drilling of orifices extending through the casing (28), the said orifices describing at least one curved row, possibly as many as six curved rows, which are notably able to house flow-straightening vanes (26).

8. Method according to one of claims 1 to 7, **characterized in that** it further comprises a step (d) of taping (106) the preform (41) to the glass-fibre ply (60), and/or of taping a membrane against the preform (41).

9. Method according to one of claims 1 to 8, **characterized in that** the casing (28) is formed of half-shells; the method further comprises a step (g) of assembling (112) the said two half-shells, the casing (28) having an inner diameter comprised between 0.40 m and 3.00 m.

10. Method according to one of claims 1 to 9, **characterized in that** it further comprises a step (h) of thermally spraying (114) an abradable material (38) inside the casing (28).

11. Method according to one of claims 1 to 10, **characterized in that**, during step (a) draping (100), the automatically placed fibres (46) comprise a two-dimensional woven tape or a tape of unidirectional fibres, the fibres potentially being preimpregnated fibres or dry fibres.

12. Method according to one of claims 1 to 11, **characterized in that** during step (a) draping (100), the automatically placed fibres (46) comprise a flat band, notably of dry fibres.

13. Method according to one of claims 1 to 12, **characterized in that** at the end of step (a) draping (100), the preform (41) exhibits at least ten strata, potentially at least fifteen strata, each one formed by at least one fibre ply or a tape of parallel fibres.

14. Method according to one of claims 1 to 13, **characterized in that** the convex form (62) comprises a convex receiving surface (64); at the end of step (c) transferring (104), the preform (41) and the glass-fibre ply (60) each cover the entirety of the convex receiving surface (64).

15. Method according to one of claims 1 to 14, **characterized in that** it further comprises a step (i) of mounting stator blades (26) inside the casing (28) so as to form from one to six flow straighteners, potentially from three to four flow straighteners.
